Europäisches Patentamt

European Patent Office

Office européen des brevets

(11) Publication number: **0 145 280**
**B1**

# (12) EUROPEAN PATENT SPECIFICATION

(45) Date of publication of patent specification: **10.08.88**

(51) Int. Cl.⁴: **G 01 F 9/02, B 60 Q 9/00**

(21) Application number: **84307739.7**

(22) Date of filing: **09.11.84**

(54) Fuel economy indicator.

(30) Priority: **18.11.83 US 553082**

(43) Date of publication of application:
**19.06.85 Bulletin 85/25**

(45) Publication of the grant of the patent:
**10.08.88 Bulletin 88/32**

(84) Designated Contracting States:
**DE FR GB IT SE**

(56) References cited:
**FR-A-2 416 455**

**FUNKSCHAU, no. 26, December 1982,
MUNICH, DE, pp. 80-84, H. SCHLICHTMANN:
"Kombination fürs Auto: Benzinverbrauchs-
und Drehzahlmesser"**

(73) Proprietor: **FloScan Instrument Company, Inc
3016 N.E. Blakeley Street
Seattle Washington 98105 (US)**

(72) Inventor: **Baatz, Wilfried
1221 162nd Lane. N.E.
Bellevue Washington, 98008 (US)**
Inventor: **Ahlquist, Norman C.
2827 Boyer Avenue E.
Seattle Washington 98102 (US)**

(74) Representative: **Arthur, Bryan Edward et al
Withers & Rogers 4 Dyer's Buildings Holborn
London EC1N 2JT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Fuel economy indicators are generally known in which the instantaneous value of miles-per-gallon is displayed to the vehicle operator by means of an analog or digital display. The miles-per-gallon value is computed using sensors which provide the instantaneous rates of fuel usage and vehicle speed. Indicators of this type require careful calibration to perform properly, and have failed to achieve widespread acceptance. In addition, a special problem arises in adapting them for use with diesel engines, since the design of diesel engine fuel systems is such that a portion of the fuel flowing to the engine is returned unconsumed to the fuel tank.

In one type of diesel engine fuel system, the ratio between total fuel flow and fuel consumption varies continuously. In such a system, there is no single point where a flow sensor can be placed to measure the fuel consumed. Two methods have been devised to provide fuel economy indicators for such systems. The first involves the use of two flow sensors, one to measure the total flow from the tank to the engine, and the second to measure the return flow from the engine to the tank, with the fuel consumed being calculated electronically by subtraction. To achieve accurate flow measurements using two sensors, it is necessary either to use two sensors closely matched for absolute accuracy, or to provide means for individual calibration of each flow sensor to compensate for their accuracy differences. Either approach adds substantially to the cost of the instrument. To achieve high levels of absolute accuracy using volumetric flow sensors, it is also necessary to measure the return flow temperature and compensate electronically for the effect of its higher temperature upon the specific gravity and viscosity of the fuel.

A second technique that can be used for variable ratio diesel fuel systems is to modify the system by adding an intermediate return flow tank which recycles the return flow directly to the engine. In this sytem, the flow from the main fuel tank to the engine equals the fuel consumed and this value can be measured directly with a single flow sensor placed between the main tank and the return tank. However, it has been found that intermediate return flow tanks adversely affect the system's heat balance under both summer and winter operating conditions. In summer, the return flow tank increases the fuel temperature, thereby reducing power output and in extreme conditions causing engine damage. In winter, by eliminating the hot return flow to the main tank, the fuel temperature in the main tank is reduced, leading to increased risk of engine shutdown due to wax build-up in the fuel line and filters when the fuel temperature drops below the cloud point. These problems are of such importance and frequency as to severely restrict the widespread adoption by the trucking industry of fuel economy indicators which depend upon return flow tanks.

In another principal type of diesel engine fuel system, the ratio of total fuel flow to fuel consumed is relatively fixed for an individual engine. In a fixed ratio engine, a single flow sensor can be used to measure total fuel flow, and fuel consumption can then be calculated electronically using that engine's ratio. The ratio, for an individual engine is fixed by the profile of a cam which regulates the position of the fuel injector which acts as a valve ultimately directing fuel into the engine and then to the return lines of the tank. Because of the large number of cam profiles in use, it is necessary to have a multitude of models, or an expensive means of calibrating each individual instrument, to achieve accurate flow measurement in absolute terms.

## Summary of the Invention

The present invention provides a novel fuel economy indicator which can be universally applied to all conventional fuel systems without individual calibration, close matching of sensors, temperature compensation or, intermediate flow tanks. The fuel economy indicator comprises sensors for producing electrical signals indicative of the vehicle's fuel consumption and speed, and means for using the information provided by such sensors to determine and display a performance ratio, consisting of the ratio of the instantaneous rate of fuel usage to the average rate of fuel usage.

The employment of an instantaneous/average ratio results in a number of surprising and significant advantages over conventional fuel economy devices. For example, precise calibration of fuel flow meters is no longer necessary. Any error in fuel flow rate will affect both the numerator and denominator of the performance ratio, and will thus cancel itself. With the present invention, it is sufficient that the speed and fuel sensors be linear, and the result is an accurate and cost effective fuel economy indicator.

French Patent FR 2416455 contains a purpose to calculate and display various parameters of the performance of a motor vehicle, including, interalia, the instantaneous fuel consumption and the average consumption as a function of distance travelled. There is no suggestion that the ratio of instantaneous to average rate of consumption should be displayed, or that any significance should be attributed to this ratio.

One embodiment of the present invention employs two fuel flow sensors and is especially suited for engines, such as variable ratio diesel engines, in which the return flow must be taken into account in determining fuel economy. This embodiment comprises a speed sensor, a flow sensor, a return flow sensor, and means for calculating the performance ratio consisting of the ratio of instantaneous fuel usage to average fuel usage. As mentioned, the absolute accuracy of the flow sensors is unimportant, because any inaccuracies cancel out in the calculation of the performance ratio. Calibration and close matching of flow sensors is therefore unnecessary.

A second embodiment of the present invention is adapted for those fuel systems in which net fuel consumption can be measured by a single sensor. In this embodiment, the sensor means comprises a speed sensor and a single fuel flow sensor, and the signals from these sensors are used directly to produce the performance ratio.

The fuel economy indicators of the present invention have an advantage over conventional fuel economy indicators in terms of the information they convey to the vehicle operator. The average fuel economy of a commercial truck varies greatly depending upon conditions which are beyond the driver's control, such as vehicle load and weather. Ths instaneous/average indicator described herein automatically allows for uncontrollable conditions and provides the driver with a relative measure of his effectiveness in managing the variables under his control, such as gear ratio, vehicle speed and rate of acceleration.

Brief Description of the Drawings

FIGURE 1 is a block diagram of an apparatus in accordance with a preferred embodiment of the present invention.

FIGURE 2 is a flow chart of the operations performed in connection with a preferred embodiment of the present invention.

FIGURE 3 is a partial block diagram of a second preferred embodiment of the present invention.

FIGURE 4 is a partial flow chart of the operations performed in connection with a preferred embodiment of the present invention.

Detailed Description of the Invention

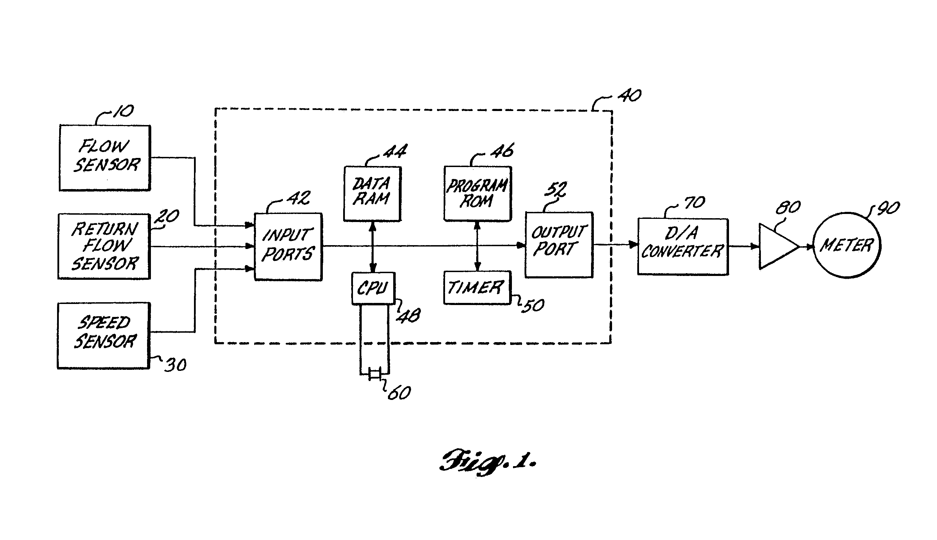

One preferred embodiment of the present invention is shown in block diagram form in FIGURE 1. The invention includes flow sensors 10 and 20, speed sensor 30, microprocessor 40, and display means comprising digital-to-analog converter 70, driver 80 and meter 90. The sensors monitor the instantaneous rate of fuel consumption (e.g., gallons-per-hour) and vehicle speed (e.g., miles-per-hour) and convey such information to microprocessor 40. The microprocessor uses this information to compute the instantaneous and average rates of fuel consumption per distance traveled, and a performance ratio consisting of the ratio of the instantaneous rate to the average rate. The performance ratio is then output to digital-to-analog converter 70 and displayed to the vehicle operator via driver 80 and meter 90. Alternately, digital means such as an LED or LCD display could be used in place of meter 90.

Flow sensor 10 is positioned in the fuel line of the vehicle at a position where it can measure the total fuel flow to the engine. For purposes of the present invention, the flow sensor should be capable of producing an electrical signal corresponding to the rate or amount of fuel flow. In a preferred embodiment, sensor 10 provides a train of pulses such that the total number of pulses during a given time period corresponds to the volume of fuel in that time period. In contrast to prior fuel economy systems, the exact ratio between the number of pulses and fuel flow is unimportant, so long as they are linearly related. Of course, a sensor having a known, nonlinear relationship between flow and output signal would also be suitable.

For applications in which return flow must be taken into account, the present invention includes return flow sensor 20 positioned in the return flow line. In a preferred embodiment, returned flow sensor 20 produces a train of pulses whose number corresponds to fuel flow, as described for flow sensor 10.

Speed sensor 30 can be of any conventional design capable of sensing motion of the vehicle or its drive train, and providing an electrical signal corresponding to vehicle speed. As with sensors 10 and 20, a preferred embodiment of the present invention is one in which speed sensor 30 outputs a train of pulses, such that the number of pulses in any given time period corresponds to the distance traveled by the vehicle in such time period.

In the embodiment shown in FIGURE 1, signals from sensors 10, 20, and 30 are received and processed by microprocessor 40. The microprocessor comprises conventional elements including input ports 42, data RAM 44, program ROM 46, CPU 48, timer 50 and output port 52. An external crystal 60 is used to control system timing. Suitable microprocessors for the present invention include the 8020 microprocessor available from Intel Corporation and the COPS microprocessor available from National Semiconductor Corporation. It is to be understood that the functions performed by the microprocessor 40 could also be performed by appropriate combinations of simpler circuit elements such as counters, gates, latches and dividers or suitable analog means, and that the invention is not to be construed as limited to the microprocessor embodiment shown in FIGURE 1.

For some sensor/microprocessor combinations, it may be necessary to pass the signal from the sensor through appropriate wave shaping circuitry before applying the signal to the microprocessor input port. For example, a common type of speed sensor 30 comprises a variable reluctance generator in which the output pulses are in the form of a variable amplitude sine wave. If input port 42 is not equipped with suitable zero crossing detector means, then it would be preferrable to interpose conventional wave shaping means between speed sensor 30 and input port 42 to convert such pulses into a square wave form.

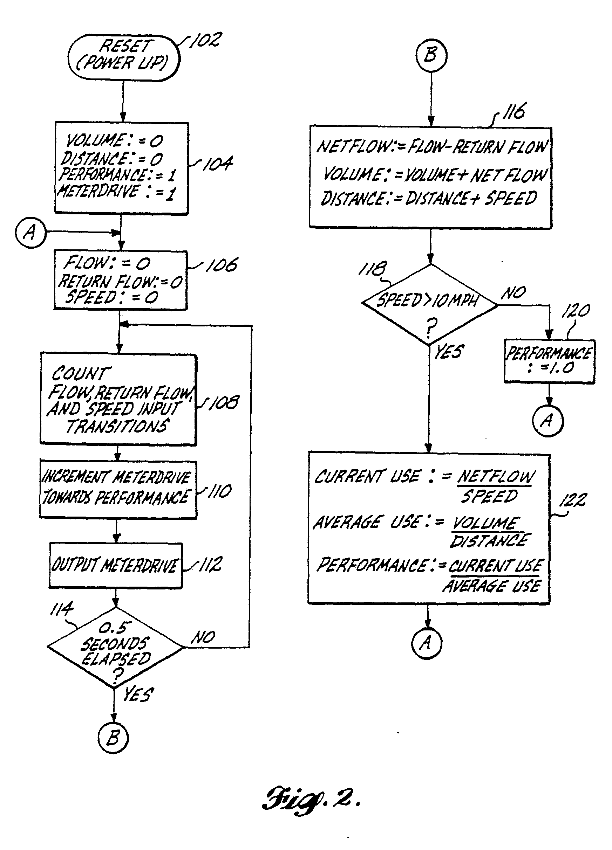

FIGURE 2 provides a flow chart suitable for operating microprocessor 40 for the preferred embodiment described above in which the signals from sensors 10, 20 and 30 comprise trains of pulses whose numbers correspond to fuel flow and distance traveled. Block 102 represents the point at which program execution begins when microprocessor 40 is powerd on. Blocks 104 and 106 initialize variables as indicated. The program then enters a loop consisting of blocks 108, 110, 112 and 114. Block 108 counts the transitions appearing at the input ports for flow sensor 10, return flow sensor 20 and speed sensor 30, storing the counts in variables FLOW, RETURN FLOW and SPEED respectively. Block 110 increments output variable METERDRIVE towards target variable PERFORMANCE, the size of the increment being adjusted as described below. Block 112 sends the value of METERDRIVE to the output port. Block 114 then determines whether 0.5 seconds have elapsed and, if not, the program jumps back to block 108 and continues looping.

Block 108 counts pulses by testing the value (high or low) at each input port and comparing the value obtained with the prior value for that port. When a transition has been detected at a port, the variable corresponding to that port is incremented by one. Optionally, a test may be added to provide that a transition (e.g., low to high) be ignored unless the following value (e.g., high) confirms that it was a true transition and not simply noise.

After counting pulses for 0.5 seconds, the program proceeds to block 116 where variables NET FLOW, VOLUME and DISTANCE are calculated as indicated. Block 118 then checks to see if the value for the variable SPEED corresponds to a vehicle speed of greater than 10 miles per hour. If not, the program sets the variable PERFORMANCE to 1.0 and jumps back to point A. The purpose of this test is to avoid dividing by zero, and to ensure that the meter reading always returns to the same point when the vehicle comes to a stop.

If the vehicle speed exceeds 10 miles per hour, the program proceeds to block 122 and calculates variables CURRENT USE, AVERAGE USE and PERFORMANCE. CURRENT USE is the fuel consumption per unit distance during the previous 0.5 seconds and thus represents the "instantaneous" vehicle fuel economy. AVERAGE USE is the average vehicle fuel consumption per unit distance since system reset. PERFORMANCE is thus the ratio of the instantaneous fuel consumption to the average fuel consumption. PERFORMANCE values greater than 1.0 indicate that the vehicle's current fuel economy is comparatively low, while values less than 1.0 indicate comparatively good current fuel economy. It should be apparent that the calculations indicated in block 122 can be performed in a number of algebraically equivalent ways. For example, PERFORMANCE could be expressed as NETFLOW/VOLUME divided by DISTANCE/SPEED. After determining the value of PERFORMANCE, the program returns to point A, resets the count variables to zero, and reenters the counting/output loop beginning at block 108.

The value of PERFORMANCE is not output directly. Instead, it is converted by block 110 into variable METERDRIVE, and METERDRIVE is sent to parallel output port 52 by block 112. Digital to analog converter 70 then converts the METERDRIVE value to an analog signal which controls meter 90 via driver 80. Block 110 performs a damping function to prevent overdriving of meter 90 by rapid changes in the PERFORMANCE value. In one preferred embodiment, block 110 stores 16 values corresponding to the values of the variable PERFORMANCE each 0.125 seconds during the past two seconds, and calculates METERDRIVE by taking the average of such 16 values. The current value of METERDRIVE is sent to output port 52 each time the program moves through block 112.

In a preferred embodiment, meter 90 is a center zero meter, and driver 80 is adapted to drive the meter to the left when METERDRIVE is greater than 1.0, to drive it to the right when METERDRIVE is less than 1.0, and to provide no driving signal when METERDRIVE equals 1.0. A conventional dual op-amp constant current driver is suitable. The driver may also include additional damping means to supplement the damping provided by block 110. Such additional damping means can comprise a single pole, low pass filter having a time constant on the order of 0.5 seconds.

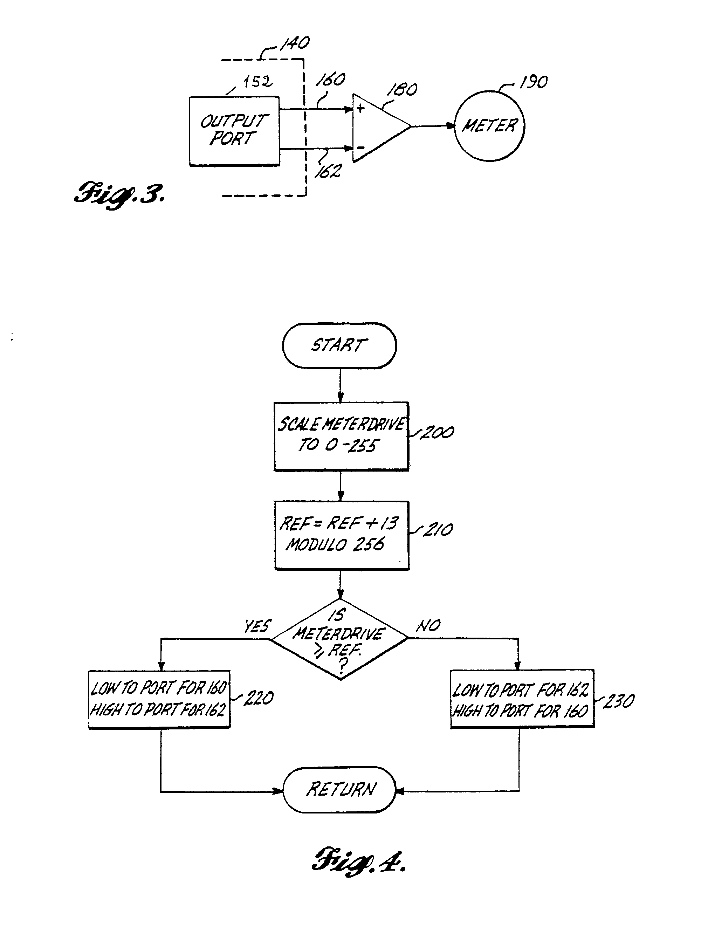

A second preferred embodiment of the present invention is illustrated in partial schematic form in FIGURE 3. In this embodiment, the position of meter 190 is determined by the signals (high or low) on two single lines 160 and 162 which operate through a differential driver 180. Driver 180 may comprise a conventional differential op-amp, with damping means similar to that described for driver 80. The signals on lines 160 and 162 are set by microprocessor 140 through output port 152. For purposes of the present description, it will be assumed driver 180 is responsive to a low signal on line 160 to move meter 190 to the right, and to a low signal on line 162 to move meter 190 to the left, although other arrangements are also suitable. The actual position of the meter is determined by the fraction of time that line 160 is pulled low compared to the fraction of time that line 162 is pulled low. Signals on lines 160 and 162 are determined by microprocessor 152 using a program identical to the one shown in FIGURE 2, except that output block 112 is not present. Instead, the program transfers control at evenly spaced time intervals (e.g. every millisecond) to an output subroutine such as the one shown in block diagram form in FIGURE 4. The calling of the FIGURE 4 subroutine is controlled by conventional interrupt or polling techniques.

The subroutine updates the values being sent to output port 152 by comparing the value of METERDRIVE to the value of variable REF. When the FIGURE 4 subroutine is called, block 200 scales METERDRIVE to a value in the range 0—255, such that a value of 128 corresponds to a METERDRIVE value of 1.0. Block 210 then updates REF by adding 13 to it modulo 256. Block 220 or 230 then drive lines 160 or 162 respectively (by pulling them low), depending on whether or not METERDRIVE is less than REF. Increments other than 13 may be used in block 210. However, it is preferable for the increment to be a prime number, since a prime increment insures that in 256 consecutive iterations through block 210, e.g. in about 0.256 seconds, REF will take on all values from zero through 255 exactly once. Thus for a METERDRIVE value of 1.0, lines 160 and 162 will on the average be pulled low with equal frequency, and meter 190 will read at its center position. However, when METERDRIVE is less than 1.0, then block 230 will be executed more often than in block 220, with the result that line 162 will be pulled low more often than line 160, and meter 190 will read right of center. In a corresponding fashion, a METERDRIVE value greater than 1.0 will result in a left of centre reading for meter 190.

## Claims

1. A fuel economy indicator for a vehicle having a liquid fuel consuming engine with sensor means (10, 30) for producing electrical signals indicative of the vehicle's fuel consumption and speed characterised by means (40, 140) responsive to said signals for producing an output signal indicative of the ratio of the instantaneous rate of fuel consumed per distance travelled to the average rate of fuel consumed per distance travelled accuracy of the output signal being independent of the accuracy of the sensor means; and means (90, 190) for displaying said output signal.

2. The fuel economy indicator according to Claim 1, characterised in that the sensor means comprises a vehicle speed sensor (30), a flow sensor (10) responsive to the rate of fuel flow to the engine, and a return flow sensor (20) responsive to the rate of fuel flow from the engine.

3. The fuel economy indicator according to Claim 1, characterised in that the means for displaying said output signal comprises a digital to analog converter (70) connected to receive said output signal and produce an analog signal corresponding thereto, and a meter (90) responsive to said analog signal to display the value of said ratio, and in that the means for producing an output signal comprises means for converting said ratio into first and second output signals, the means for displaying said output signal including driver means (80) operable to deflect said meter in one direction in response to said first output signal and in the opposite direction in response to said second output signal.

4. The fuel economy indicator according to Claim 3, characterised in that the means for converting said ratio to said first and second output signals comprises means for comparing said ratio to a reference.

5. The fuel economy indicator according to Claim 4, characterised in that the means for converting said ratio to said first and second output signals further comprises means (110) for incrementing the reference at evenly spaced time intervals such that the values taken on by the reference repeat themselves after a fixed time interval.

6. The fuel economy indicator according to Claim 5, characterised in that the time interval is on the order of 0.5 seconds.

## Patentansprüche

1. Vorrichtung für ein von einem mit Kraftstoff betriebenen Motor angetriebenes Fahrzeug zur Anzeige des günstigsten Kraftstoffverbrauches, mit einem Fühlmittel (10, 30) zur Erzeugung elektrischer Signale, die für den Kraftstoffverbrauch und die Geschwindigkeit des Fahrzeuges indikativ sind, gekennzeichnet, durch ein auf die genannten Signale ansprechendes Mittel (40, 140) zur Erzeugung eines Ausgangssignales, das indikativ ist für das Verhältnis der für eine zurückgelegte Fahrstrecke tatsächlich verbrauchten Kraftstoffmenge zu der Durchschnittsmenge des für die Fahrstrecke verbrauchten Kraftstoffes, wobei die Genauigkeit des Ausgangssignales unabhängig ist von der Genauigkeit des Fühlmittels und gekennzeichnet durch ein Mittel (90, 190) zur Sichtanzeige des genannten Ausgangssignales.

2. Anzeigevorrichtung nach Anspruch 1, dadurch gekennzeichnet, daß das Fühlmittel einen Fühler (30) für die Fahrzeuggeschwindigkeit und einen Strömungsfühler (10), der auf die Menge des dem Motor zugeführten Kraftstoffes anspricht, aufweist und daß ein Rückstromfühler (20) vorgesehen ist, der auf die Menge des vom Motor abströmenden Strömungsmittels anspricht.

3. Anzeigevorrichtung nach Anspruch 1, dadurch gekennzeichnet, daß das Mittel zur Sichtanzeige der genannten Ausgangssignale einen Digital-Analog-Wandler (70) enthält, der zur Aufnahme des genannten Ausgangssignales und zur Erzeugung eines diesem entsprechenden analogen Signales geschaltet ist und daß das Mittel zur Sichtanzeige ein Meßgerät (90) enthält, das auf das genannte analoge Signal anspricht, um den Wert des genannten Verhältnisses sichtbar anzuzeigen und weiter dadurch gekennzeichnet, daß das Mittel zur Erzeugung eines Ausgangssignales ein Mittel zur Umwandlung des genannten Verhältnisses in erste und zweite Ausgangssignale enthält, wobei das Mittel zur Sichtanzeige des genannten Ausgangssignales ein Antriebsmittel (80) einschließt, das zu betätigen ist, um das genannte Meßgerät infolge des genannten ersten Ausgangssignales in eine erste Richtung und infolge des genannten zweiten Ausgangssignales in die entgegengesetzte Richtung umzulenken.

4. Anzeigevorrichtung nach Anspruch 3, dadurch gekennzeichnet, daß das Mittel zur Umwandlung des genannten Verhältnisses in die genannten ersten und zweiten Ausgangssignale ein Mittel zum Vergleich dieses genannten Verhältnisses mit einem Referenz-wert enthält.

5. Anzeigevorrichtung nach Anspruch 4, dadurch gekennzeichnet, daß das Mittel zur Umwandlung des genannten Verhältnisses in die genannten ersten und zweiten Ausgangssignale des weiteren ein Mittel für die Verstärkung des Bezugswertes in gleichbleibenden Zeitintervallen derart enthält, daß sich die zum Vergleich mit dem Bezugswert zu bringenden Werte nach einem festen Zeitintervall wiederholen.

6. Anzeigevorrichtung nach Anspruch 5, dadurch gekennzeichnet, daß das Zeitintervall im Bereich von 0,5 Sekunden liegt.

**Revendications**

1. Un indicateur d'économie de carburant pour un véhicule à moteur à carburant liquide et dans lequel sont prévus des moyens de captage (10, 30) pour émettre des signaux électriques indiquant la consommation de carburant et la vitesse du véhicule, caractérisé par des moyens (40, 140) sensibles auxdits signaux pour émettre un signal de sortie indiquant le rapport entre la consommation instantanée de carburant par unité de distance parcourue et la consommation moyenne de carburant par unité de distance parcourue, la précision du signal de sortie étant indépendante de la précision des moyens de captage, et par des moyens (90, 190) d'affichage dudit signal de sortie.

2. L'indicateur d'économie de carburant selon la revendication 1, caractérisé en ce que les moyens de captage comportent un capteur de vitesse de véhicule (30), un capteur de débit (10) sensible au débit de carburant s'écoulant vers le moteur et un capteur de débit de retour (20) sensible au débit de carburant en retour du moteur.

3. L'indicateur d'économie de carburant selon la revendication 1, caractérisée en ce que les moyens d'affichage dudit signal de sortie comportent un convertisseur numérique/analogique (70) branché pour recevoir ledit signal de sortie et émettre un signal analogique correspondant, et un appareil de mesure (90) sensible audit signal analogique pour afficher la valeur audit rapport et en ce que les moyens d'émission d'un signal de sortie comportent des moyens de conversion dudit rapport en premier et second signaux de sortie, les moyens d'affichage dudit signal de sortie comportant des moyens d'orientation (80) fonctionnant pour dévier ledit appareil de mesure dans une direction en réponse audit premier signal de sortie et dans la direction opposée en réponse audit second signal de sortie.

4. L'indicateur d'économie de carburant selon la revendication 3, caractérisé en ce que les moyens de conversion dudit rapport en lesdits premier et second signaux comportent des moyens de comparaison dudit rapport à une référence.

5. L'indicateur d'économie de carburant selon la revendication 4, caractérisé en ce que les moyens de conversion dudit rapport en lesdits premier et second signaux de sortie comportent en outre des moyens (110) de différentiation de la référence à des intervalles de temps réguliers de telle façon que les valeurs prises par la référence se répètent après un intervalle de temps prédéterminé.

6. L'indicateur d'économie de carburant selon la revendication 5, caractérisé en ce que l'intervalle de temps est de l'ordre de 0,5 seconde.

0 145 280

FLOW SENSOR 10

RETURN FLOW SENSOR 20

SPEED SENSOR 30

INPUT PORTS 42

DATA RAM 44

CPU 48

60

PROGRAM ROM 46

TIMER 50

OUTPUT PORT 52

40

D/A CONVERTER 70

80

METER 90

Fig.1.

𝕱𝒾𝓰.2.

**Fig.3.**

140
152 OUTPUT PORT
160 +
162 −
180
190 METER

START

SCALE METERDRIVE TO 0 −255 — 200

REF = REF + 13 MODULO 256 — 210

IS METERDRIVE ≥ REF. ?

YES

NO

LOW TO PORT FOR 160 HIGH TO PORT FOR 162 — 220

LOW TO PORT FOR 162 HIGH TO PORT FOR 160 — 230

RETURN

**Fig.4.**